(19) Europäisches Patentamt
European Patent Office
Office européen des brevets

(11) **EP 4 576 622 A1**

(12) **EUROPEAN PATENT APPLICATION**
published in accordance with Art. 153(4) EPC

(43) Date of publication:
**25.06.2025 Bulletin 2025/26**

(21) Application number: **22957773.9**

(22) Date of filing: **09.09.2022**

(51) International Patent Classification (IPC):
**H04L 1/00** (2006.01)    **H04W 64/00** (2009.01)

(52) Cooperative Patent Classification (CPC):
**H04L 1/00; H04W 64/00**

(86) International application number:
**PCT/CN2022/117991**

(87) International publication number:
**WO 2024/050803 (14.03.2024 Gazette 2024/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **ZHOU, Zhi
  Shenzhen, Guangdong 518129 (CN)**
• **HE, Jia
  Shenzhen, Guangdong 518129 (CN)**
• **ZHANG, Xi
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SENSING METHOD, APPARATUS AND SYSTEM**

(57)    A sensing method, an apparatus, and a system are provided. In the sensing method, a sensing node obtains sensing data of a first target, and determines, based on confidence of first sensing data, whether to send the first sensing data. The first sensing data belongs to the sensing data of the first target, the confidence is determined based on a first parameter, the first parameter includes at least one of the following: a beamwidth of a first beam, a measurement delay of measuring the first target, a communication bandwidth for measuring the first target, or a beam angle of arrival at which a first beam reaches the first target, and the first beam is a beam used for sensing the first target. The sensing node determines, based on confidence, sensing data to be reported to a sensing center, thereby reducing redundant data and saving communication resources. In addition, the sensing node uses the confidence as a reference factor for determining whether to report the sensing data, and reports, to the sensing center, sensing data that meets a confidence condition, thereby improving sensing precision.

FIG. 5

## Description

### TECHNICAL FIELD

This application relates to the communication field, and in particular, to a sensing method, an apparatus, and a system.

### BACKGROUND

Integrated sensing and communication is a new information processing technology that implements collaboration between a sensing function and a communication function based on software and hardware resource sharing or information sharing. This can effectively improve spectral efficiency, hardware efficiency, and information processing efficiency of a system. In addition, it is a capability trend for advanced wireless base stations and terminals to have the communication function and the sensing function. Enabling intelligent technologies in advanced wireless to obtain sensing information from an environment becomes an important means.

Currently, in the field of sensing, sensing regions of different devices spatially overlap to some extent, and most scenarios of a sensing environment may not change with time. There is a large amount of redundancy between data sensed by each device at each moment, and there are a large quantity of repeated reports. This wastes communication resources.

Therefore, how to reduce data redundancy in a sensing process and reduce resource consumption is an urgent problem to be resolved.

### SUMMARY

This application provides a sensing method, an apparatus, and a system, to reduce data redundancy in a sensing process and reduce resource consumption.

According to a first aspect, an embodiment of this application provides a sensing method. The method may be performed by a sensing node, or may be performed by a chip or a circuit configured for the sensing node. This is not limited in this application. For ease of description, the following uses an example in which the method is performed by a sensing node for description.

The method may include: obtaining sensing data of a first target, and determining, based on confidence of first sensing data, whether to send the first sensing data, where the first sensing data belongs to the sensing data of the first target, the confidence is determined based on a first parameter, the first parameter includes at least one of the following: a beamwidth of a first beam, a delay of sensing the first target, a signal bandwidth for sensing the first target, or a beam angle of arrival at which a first beam reaches the first target, and the first beam is a beam used for sensing the first target.

In the method, the sensing node determines, based on the confidence, whether to report the first sensing data to a sensing center, thereby reducing redundancy of reported data, compressing an amount of the reported data, and saving communication resources.

In some implementations of the first aspect, the determining, based on confidence of first sensing data, whether to send the first sensing data includes: determining, based on the confidence of the first sensing data and confidence of first data, whether to send the first sensing data, where the first data belongs to local data of the first target.

In this manner, the sensing node compares confidence of the sensing data with confidence of the local data, and determines, based on a comparison result, whether to report the sensing data. In other words, the sensing node reports the sensing data that is better than the local data, thereby further reducing data redundancy.

In some implementations of the first aspect, when the confidence of the first sensing data is greater than or equal to the confidence of the first data, the first sensing data is sent;

> when a ratio of the confidence of the first sensing data to the confidence of the first data is greater than or equal to a first threshold, the first sensing data is sent; or
> when a difference between the confidence of the first sensing data and the confidence of the first data is greater than or equal to a second threshold, the first sensing data is sent.

In some implementations of the first aspect, first information is received, where the first information indicates the first threshold or the second threshold.

In some implementations of the first aspect, the determining, based on confidence of first sensing data, whether to send the first sensing data includes: determining, based on the confidence of the first sensing data and a first confidence threshold, whether to send the first sensing data.

In some implementations of the first aspect, second information is received, where the second information indicates the first confidence threshold.

In the foregoing manner, conditions for determining, by the sensing node, whether to report the first sensing data are provided. In other words, the sensing node reports, to the sensing center, sensing data that meets these conditions. In other words, when the confidence of the sensing data is better than the confidence of the local data, or the confidence of the sensing data meets a confidence threshold, the sensing node may report the sensing data. This improves precision of the reported data, and further improves sensing precision.

It should be understood that the first threshold, the second threshold, or the first confidence threshold may be indicated, predefined, or configured. This is not limited in embodiments of this application. It should be further understood that when the first threshold, the second threshold, or the first confidence threshold is indicated, the first threshold, the second threshold, or the first confidence threshold may be indicated in a same piece of indication information, or may be indicated in a plurality of pieces of indication information. This is not limited in embodiments of this application.

In some implementations of the first aspect, third information is received, where the third information indicates location information of a first region, and the first region includes the first target.

In other words, the third information may indicate a to-be-updated region, and the region may be predefined.

In some implementations of the first aspect, the first region includes at least one sub-region. The at least one sub-region is in a one-to-one correspondence with at least one confidence threshold, and the at least one confidence threshold includes the first confidence threshold. Alternatively, the at least one sub-region is in a one-to-one correspondence with at least one threshold, and the at least one threshold includes the first threshold or the second threshold.

In other words, different sub-regions may correspond to different confidence thresholds, or different sub-regions may correspond to different first thresholds, or different sub-regions may correspond to different second thresholds. Different sub-regions may have different requirements on sensing precision. The sensing node may determine, based on confidence thresholds or thresholds corresponding to different sub-regions, sensing data to be reported, so that sensing requirements of different sub-regions can be matched, and flexibility of determining sensing data by the sensing node is improved.

Optionally, the confidence thresholds, the first thresholds, or the second thresholds corresponding to different sub-regions may alternatively be the same.

In some implementations of the first aspect, a sensing map is obtained, and the sensing map includes the first data.

Optionally, the sensing map may be a grid-based sensing map, or may be a point cloud sensing map.

In some implementations of the first aspect, K second targets are determined, the K second targets correspond to K pieces of second sensing data, and K is an integer greater than or equal to 1. Whether to report the first sensing data is determined based on confidence of the K pieces of second sensing data and the confidence of the first sensing data.

In this manner, the sensing node may determine, based on the confidence of the first sensing data and confidence of sensing data of another target, whether to report the first sensing data. In other words, the sensing node may compare the first sensing data with surrounding sensing data, and report sensing data that meets a condition. This manner provides flexibility for data compression.

In some implementations of the first aspect, a second parameter is a distance threshold, and there are K second targets within a range of the distance threshold. Alternatively, a second parameter is a value of K, the K second targets are K targets that are closest to the first target on the sensing map, and the sensing map indicates the first target and the K second targets.

In other words, the sensing node may determine a specific quantity of sensing data as a comparison object from a nearby target point, or may determine a specific quantity of sensing data that is closest as a comparison object.

In some implementations of the first aspect, fourth information is received, and the fourth information indicates the sensing map.

In some implementations of the first aspect, the confidence and the first parameter satisfy the following relationship:

$$D = \frac{2}{1 + e^{\frac{ct\theta \sin(\varphi - \theta/2)}{2B}}}$$

D is the confidence, c is a light speed, t is the delay of sensing the first target, $\varphi$ is the beam angle of arrival at which the first beam reaches the first target, $\theta$ is the beamwidth of the first beam, and B is the signal bandwidth for sensing the first target.

According to a second aspect, an embodiment of this application provides a sensing method. The method may be performed by a sensing center, or may be performed by a chip or a circuit configured for the sensing center. This is not limited in this application. For ease of description, the following uses an example in which the method is performed by a sensing center for description.

The method may include: receiving first sensing data, where the first sensing data is determined based on confidence of the first sensing data, the first sensing data belongs to sensing data of a first target, the confidence is determined based on a first parameter, the first parameter includes at least one of the following: a beamwidth of a first beam, a delay of sensing the first target, a signal bandwidth for sensing the first target, or a beam angle of arrival at which a first beam reaches the first target, the first beam is a beam used for sensing the first target, first data of the first target is updated to the first sensing data, and the first data belongs to local data of the first target.

In some implementations of the second aspect, the confidence of the first sensing data is greater than or equal to confidence of the first data, a ratio of the confidence of the first sensing data to confidence of the first data is greater than or equal to a first threshold, a difference between the confidence of the first sensing data and confidence of the first data is greater than or equal to a second threshold, or the confidence of the first sensing data is greater than or equal to a first confidence threshold.

In some implementations of the second aspect, before the receiving first sensing data, the method further includes: sending first information, where the first information indicates the first threshold or the second threshold; or sending second information, where the second information indicates the first confidence threshold.

In some implementations of the second aspect, the method further includes: sending third information, where the third information indicates location information of a first region, and the first region includes the first target.

In some implementations of the second aspect, the first region includes at least one sub-region. The at least one sub-region is in a one-to-one correspondence with at least one confidence threshold, and the at least one confidence threshold includes the first confidence threshold. Alternatively, the at least one sub-region is in a one-to-one correspondence with at least one threshold, and the at least one threshold includes the first threshold or the second threshold.

In some implementations of the second aspect, a second parameter is sent. The second parameter is a distance threshold, there are K second targets within a range of the distance threshold, the K second targets correspond to K pieces of second sensing data, and K is an integer greater than or equal to 1. Alternatively, the second parameter is a value of K, K second targets are K targets that are closest to the first target on a sensing map, the sensing map indicates the first target and the K second targets, and that the first sensing data is determined based on confidence of the first sensing data includes: The first sensing data is determined based on confidence of K pieces of second sensing data and the confidence of the first sensing data.

In some implementations of the second aspect, fourth information is sent, and the fourth information further indicates the sensing map.

In some implementations of the second aspect, the confidence and the first parameter satisfy the following relationship:

$$D = \frac{2}{1 + e^{\frac{ct\theta\sin(\varphi-\theta/2)}{2B}}}$$

D is the confidence, c is a light speed, t is the delay of sensing the first target, $\varphi$ is the beam angle of arrival at which the first beam reaches the first target, $\theta$ is the beamwidth of the first beam, and B is the signal bandwidth for sensing the first target.

It should be understood that the second aspect is sensing-center-side implementation corresponding to the first aspect. Descriptions of explanations, supplements, possible implementations, and beneficial effects related to the first aspect are also applicable to the second aspect. Details are not described herein again.

According to a third aspect, a communication apparatus is provided. The communication apparatus may be used in the sensing node in the first aspect. The communication apparatus may be a sensing node, or may be an apparatus (for example, a chip, a chip system, or a circuit) in the sensing node, or may be an apparatus that can be used in a matching manner with the sensing node.

In a possible implementation, the communication apparatus may include modules or units that are in a one-to-one correspondence with the methods/operations/steps/actions described in the first aspect. The modules or units may be implemented by a hardware circuit, software, or a combination of a hardware circuit and software.

In a possible implementation, the apparatus includes a processing module. The processing module is configured to obtain sensing data of a first target, and the processing module is further configured to determine, based on confidence of first sensing data, whether to send the first sensing data, where the first sensing data belongs to the sensing data of the first target, the confidence is determined based on a first parameter, the first parameter includes at least one of the following: a beamwidth of a first beam, a delay of sensing the first target, a signal bandwidth for sensing the first target, or a beam angle of arrival at which a first beam reaches the first target, and the first beam is a beam used for sensing the first target.

In some implementations of the third aspect, the processing module is configured to determine, based on the confidence of the first sensing data and confidence of first data, whether to send the first sensing data, where the first data belongs to local data of the first target.

In some implementations of the third aspect, the apparatus further includes a transceiver module. The transceiver module is configured to: when the confidence of the first sensing data is greater than or equal to the confidence of the first data, send the first sensing data;

when a ratio of the confidence of the first sensing data to the confidence of the first data is greater than or equal to a first threshold, send the first sensing data; or
when a difference between the confidence of the first sensing data and the confidence of the first data is greater than or equal to a second threshold, send the first sensing data.

In some implementations of the third aspect, the transceiver module is further configured to receive second information, where the second information indicates the first threshold or the second threshold.

In some implementations of the third aspect, the processing module is configured to determine, based on the confidence of the first sensing data and a first confidence threshold, whether to send the first sensing data.

In some implementations of the third aspect, the apparatus further includes a transceiver module. The transceiver module is configured to receive second information, where the second information indicates the first confidence threshold.

In some implementations of the third aspect, the apparatus further includes the transceiver module. The transceiver module is configured to receive third information, where the third information indicates location information of a first region, and the first region includes the first target.

In some implementations of the third aspect, the first region includes at least one sub-region. The at least one sub-region is in a one-to-one correspondence with at least one confidence threshold, and the at least one confidence threshold includes the first confidence threshold. Alternatively, the at least one sub-region is in a one-to-one correspondence with at least one threshold, and the at least one threshold includes the first threshold or the second threshold.

In some implementations of the third aspect, the processing module is further configured to determine K second targets, the K second targets correspond to K pieces of second sensing data, and K is an integer greater than or equal to 1. The processing module is further configured to determine, based on confidence of the K pieces of second sensing data and the confidence of the first sensing data, whether to report the first sensing data.

In some implementations of the third aspect, the apparatus further includes a transceiver module, and the transceiver module is configured to receive a second parameter.

The second parameter is a distance threshold, and there are K second targets within a range of the distance threshold.

Alternatively, the second parameter is a value of K, the K second targets are K targets that are closest to the first target on a sensing map, and the sensing map indicates the first target and the K second targets.

In some implementations of the third aspect, the transceiver module is further configured to receive fourth information, and the fourth information indicates the sensing map.

In some implementations of the third aspect, the confidence and the first parameter satisfy the following relationship:

$$D = \frac{2}{1 + e^{\frac{ct\theta\sin(\varphi - \theta/2)}{2B}}}$$

D is the confidence, c is a light speed, t is the delay of sensing the first target, $\varphi$ is the beam angle of arrival at which the first beam reaches the first target, $\theta$ is the beamwidth of the first beam, and B is the signal bandwidth for sensing the first target.

According to a fourth aspect, a communication apparatus is provided. The communication apparatus may be used in the sensing center in the second aspect. The communication apparatus may be a sensing center, or may be an apparatus (for example, a chip, a chip system, or a circuit) in the sensing center, or may be an apparatus that can be used in a matching manner with the sensing center.

In a possible implementation, the communication apparatus may include modules or units that are in a one-to-one correspondence with the methods/operations/steps/actions described in the second aspect. The modules or units may be implemented by a hardware circuit, software, or a combination of a hardware circuit and software.

In a possible implementation, the communication apparatus includes a transceiver module and a processing module. The transceiver module is configured to receive first sensing data, where the first sensing data is determined based on confidence of the first sensing data, the first sensing data belongs to sensing data of a first target, the confidence is determined based on a first parameter, the first parameter includes at least one of the following: a beamwidth of a first beam, a delay of sensing the first target, a signal bandwidth for sensing the first target, or a beam angle of arrival at which a first beam reaches the first target, and the first beam is a beam used for sensing the first target. The processing module is configured to update first data of the first target to the first sensing data, and the first data belongs to local data of the first target.

In some implementations of the fourth aspect, the confidence of the first sensing data is greater than or equal to confidence of the first data, a ratio of the confidence of the first sensing data to confidence of the first data is greater than or equal to a first threshold, a difference between the confidence of the first sensing data and confidence of the first data is greater than or equal to a second threshold, or the confidence of the first sensing data is greater than or equal to a first confidence threshold.

In some implementations of the fourth aspect, the transceiver module is further configured to send first information, where the first information indicates the first threshold or the second threshold; or the transceiver module is further configured to send second information, where the second information indicates the first confidence threshold.

In some implementations of the fourth aspect, the transceiver module is further configured to send third information, where the third information indicates location information of a first region, and the first region includes the first target.

In some implementations of the fourth aspect, the first region includes at least one sub-region. The at least one sub-region is in a one-to-one correspondence with at least one confidence threshold, and the at least one confidence threshold includes the first confidence threshold. Alternatively, the at least one sub-region is in a one-to-one correspondence with at least one threshold, and the at least one threshold includes the first threshold or the second threshold.

In some implementations of the fourth aspect, the transceiver module is further configured to send a second parameter.

The second parameter is a distance threshold, there are K second targets within a range of the distance threshold, the K second targets correspond to K pieces of second sensing data, K is an integer greater than or equal to 1, and the first sensing data is determined based on confidence of the K pieces of second sensing data and the confidence of the first sensing data.

Alternatively, the second parameter is a value of K, K second targets are K targets that are closest to the first target on a sensing map, the sensing map indicates the first target and the K second targets, and that the first sensing data is determined based on confidence of the first sensing data includes:

The first sensing data is determined based on confidence of K pieces of second sensing data and the confidence of the first sensing data.

In some implementations of the fourth aspect, the confidence and the first parameter satisfy the following relationship:

$$D = \frac{2}{1 + e^{\frac{ct\theta \sin(\varphi - \theta/2)}{2B}}}$$

D is the confidence, c is a light speed, t is the delay of sensing the first target, $\varphi$ is the beam angle of arrival at which the first beam reaches the first target, $\theta$ is the beamwidth of the first beam, and B is the signal bandwidth for sensing the first target.

It should be understood that the third aspect and the fourth aspect are apparatus-side implementations corresponding to the first aspect and the second aspect respectively. Descriptions of explanations, supplements, possible implementations, and beneficial effects related to the first aspect and the second aspect are also applicable to the third aspect and the fourth aspect. Details are not described herein again.

According to a fifth aspect, an embodiment of this application provides a communication apparatus, including an interface circuit and a processor. The interface circuit is configured to implement a function of the transceiver module in the third aspect, and the processor is configured to implement a function of the processing module in the third aspect.

According to a sixth aspect, an embodiment of this application provides a communication apparatus, including an interface circuit and a processor. The interface circuit is configured to implement a function of the transceiver module in the fourth aspect, and the processor is configured to implement a function of the processing module in the fourth aspect.

According to a seventh aspect, an embodiment of this application provides a computer-readable medium. The computer-readable medium stores a program to be executed by a terminal device or an apparatus in the terminal device. The program includes instructions used to perform the method in the first aspect or the second aspect, any one of the possible manners of the first aspect or the second aspect, or all the possible manners of the first aspect or the second aspect.

According to an eighth aspect, an embodiment of this application provides a computer-readable medium. The computer-readable medium stores a program to be executed by a network device or an apparatus in the network device. The program includes instructions used to perform the method in the first aspect or the second aspect, any one of the possible manners of the first aspect or the second aspect, or all the possible manners of the first aspect or the second aspect.

According to a ninth aspect, a computer program product storing computer-readable instructions is provided. When the computer-readable instructions are run on a computer, the computer is enabled to perform the method in the first aspect, any one of the possible manners of the first aspect, or all the possible manners of the first aspect.

According to a tenth aspect, a computer program product storing computer-readable instructions is provided. When the computer-readable instructions are run on a computer, the computer is enabled to perform the method in the second aspect, any one of the possible manners of the second aspect, or all the possible manners of the second aspect.

According to an eleventh aspect, a communication system is provided. The communication system includes an apparatus that has a function of implementing the method in the first aspect, any one of the possible manners of the first aspect, or all the possible manners of the first aspect and various possible designs and an apparatus that has a function of implementing the method in the second aspect, any one of the possible manners of the second aspect, or all the possible manners of the second aspect and various possible designs.

According to a twelfth aspect, a processor is provided, configured to be coupled to a memory, and configured to perform the method in the first aspect, any one of the possible manners of the first aspect, or all the possible manners of the first aspect.

In a possible implementation, the memory is configured to store computer instructions, and the processor runs the computer instructions to perform the method in the first aspect, any one of the possible manners of the first aspect, or all the possible manners of the first aspect.

In a possible implementation, the memory and the processor are integrated together.

According to a thirteenth aspect, a processor is provided, configured to be coupled to a memory, and configured to perform the method in the second aspect, any one of the possible manners of the second aspect, or all the possible manners of the second aspect.

In a possible implementation, the memory is configured to store computer instructions, and the processor runs the computer instructions to perform the method in the second aspect, any one of the possible manners of the second aspect, or all the possible manners of the second aspect.

In a possible implementation, the memory and the processor are integrated together.

According to a fourteenth aspect, a chip system is provided. The chip system includes a processor, and may further include a memory. The processor is configured to execute a computer program or instructions stored in the memory, to enable the chip system to implement the method in either the first aspect or the second aspect, or any possible implementation of either the first aspect or the second aspect. The chip system may include a chip, or may include a chip and another discrete device.

According to a fifteenth aspect, a computer program product storing computer-readable instructions is provided. When the computer-readable instructions are run on a computer, the computer is enabled to perform the method in the first aspect, any one of the possible manners of the first aspect, or all the possible manners of the first aspect.

According to a sixteenth aspect, a computer program product storing computer-readable instructions is provided. When the computer-readable instructions are run on a computer, the computer is enabled to perform the method in the second aspect, any one of the possible manners of the second aspect, or all the possible manners of the second aspect.

**BRIEF DESCRIPTION OF DRAWINGS**

FIG. 1 is a diagram of an architecture of a communication system to which an embodiment of this application is applicable;
FIG. 2 shows a manner of compressing data;
FIG. 3 shows a cumulative distribution function curve of a bandwidth and a sensing distance error;
FIG. 4 shows a cumulative distribution function curve of a beam angle of arrival and a sensing distance error;
FIG. 5 is a diagram of a sensing method according to an embodiment of this application;
FIG. 6 shows a sensing map according to an embodiment of this application;
FIG. 7 shows another sensing map according to an embodiment of this application;
FIG. 8 shows a manner of calculating confidence according to an embodiment of this application;
FIG. 9 shows a manner of determining confidence of sensing data according to an embodiment of this application;
FIG. 10 shows another manner of determining confidence of sensing data according to an embodiment of this application;
FIG. 11 shows another manner of determining confidence of sensing data according to an embodiment of this application;
FIG. 12 shows another manner of determining confidence of sensing data according to an embodiment of this application;
FIG. 13 shows another manner of determining confidence of sensing data according to an embodiment of this application;
FIG. 14 is a diagram of a sensing procedure according to an embodiment of this application;
FIG. 15 is a block diagram of a communication apparatus according to an embodiment of this application; and
FIG. 16 is a block diagram of another communication apparatus according to an embodiment of this application.

**DESCRIPTION OF EMBODIMENTS**

The following describes technical solutions of embodiments in this application with reference to accompanying drawings.

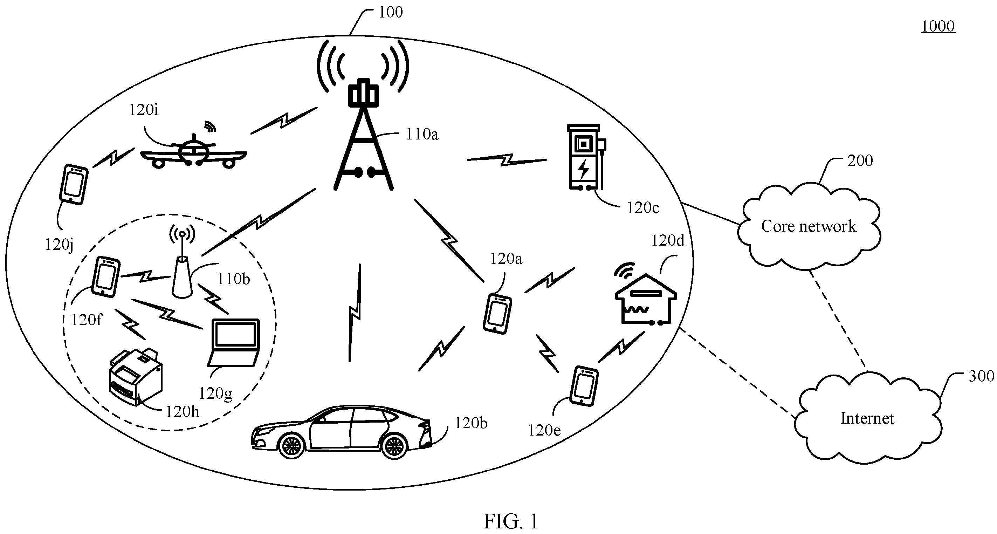

FIG. 1 is a diagram of an architecture of a communication system 1000 to which an embodiment of this application is applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device that are not shown in FIG. 1.

The radio access network device may be referred to as a network device, and may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile

communication system, a base station in a mobile communication system evolved after 5G, an access node in a Wi-Fi system, or a network device in a non-terrestrial communication network (non-terrestrial network, NTN) communication system, that is, may be deployed on a high-altitude platform, a satellite, or the like. Alternatively, the radio access network device may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications in the 3$^{rd}$ generation partnership project (3$^{rd}$ generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following uses an example in which a base station serves as the radio access network device for description.

The terminal may alternatively be referred to as a terminal device, user equipment (user equipment, UE), a mobile station, a mobile terminal, or the like. The terminal device may be widely used in various scenarios, for example, customer-premises equipment (customer-premises equipment, CPE), a smart point of sale (point of sale, POS) terminal, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

The base station and the terminal may be at a fixed location or may be movable. The base station and the terminal may be deployed on land, including an indoor or outdoor scenario and a handheld or vehicle-mounted scenario, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 by 120i, the terminal 120i is a base station. However, for the base station 110a, 120i is a terminal. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of at least 6 GHz. Alternatively, communication may be performed through both a spectrum of 6 GHz or below and a spectrum of at least 6 GHz. A spectrum resource used for wireless communication is not limited in embodiments of this application.

In embodiments of this application, a function of the network device may alternatively be performed by a module (for example, a chip) in the network device, or may be performed by a control subsystem having a network device function. The control subsystem having the network device function may be a control center in the foregoing application scenarios, such as a smart grid, industrial control, smart transportation, and a smart city. The function of the terminal may alternatively be performed by a module (for example, a chip or a modem) in the terminal, or may be performed by an apparatus having a terminal function.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be briefly referred to as "communication", and the term "communication" may also be described as "data transmission", "information transmission", or "transmission".

Integrated sensing and communication is a new information processing technology that implements collaboration between a sensing function and a communication function based on software and hardware resource sharing or information sharing. During execution of sensing, a device participating in sensing may include a sensing center and a sensing node. The sensing center may be the foregoing network device or terminal, and the sensing node may be the foregoing network device or terminal. The network device may be an access network device or a core network device. This is not limited in embodiments of this application.

For example, the sensing center may be independent. For example, the sensing center is a cloud having a specific computing capability and a specific data storage capability. In a network architecture of a 5G system, the sensing center may be an access and mobility management function (access and mobility management function, AMF) network element or a user plane function (user plane function, UPF) network element, and is connected to a base station by using a wired or wireless NG-C or NG-U. However, this application is not limited to the 5G communication system. In this case, the sensing center may not directly communicate with the sensing node (for example, UE), and data may be forwarded by a base station, for example, uploaded to the sensing center by the base station.

Alternatively, the sensing center is a base station, and the base station has a specific computing capability and a specific data storage capability. In the network architecture of the 5G system, communication between base stations is generally connected through an Xn interface, and the base station is connected to the sensing node (for example, UE) through a wired or wireless network.

It should be further understood that, with development of technologies, UE may also serve as the sensing center, and another UE may serve as the sensing node. The solution of this application is also applicable.

To facilitate understanding of the solutions in embodiments of this application, related concepts are explained.

1. Integrated sensing and communication: Integrated sensing and communication is a new information processing technology that implements collaboration between a sensing function and a communication function based on software and hardware resource sharing or information sharing. This can effectively improve spectral efficiency, hardware efficiency, and information processing efficiency of a system. In other words, integrated sensing and communication may alternatively mean that a unified design of a communication function and a sensing function is implemented through a joint design of an air interface and a protocol, time-frequency-space resource multiplexing, hardware device sharing, and the like. This allows a wireless network to implement a high-precision and refined sensing function while performing high-quality communication interaction, thereby improving overall performance and a service capability of the network.

In integrated sensing and communication, the sensing capability focuses on radio signal sensing. That is, direct signals, reflected signals, and scattered signals of radio waves are analyzed to obtain sensing of a target object or environment information (such as an attribute and a status), and functions such as positioning, ranging, speed measurement, imaging, detection, identification, and environment reconstruction are implemented to implement sensing and exploration of the physical world. In addition, it is a capability trend for advanced wireless base stations and terminals to have the communication function and the sensing function. Enabling intelligent technologies in advanced wireless communication systems to obtain sensing information from an environment becomes a necessary means. Advanced wireless base stations have a capability to detect a status of a target in a coverage region. For example, the advanced wireless base stations can detect, locate, and identify some key targets for low-altitude flying objects and traffic flows. In addition, the advanced wireless base stations and terminals are capable of sensing an ambient environment all day and in all weather conditions. Environment sensing can in turn enhance communication and is less susceptible to lighting and climate compared to cameras and lidars.

2. Point cloud: A point cloud is a data set of points in a coordinate system, and includes rich information, for example, may include factors such as three-dimensional coordinates X, Y, Z, a color, an intensity value, and time. The point cloud is generally obtained by using a three-dimensional imaging sensor, for example, a binocular camera, a three-dimensional scanner, and a depth map (red green blue-depth map, RGB-D) camera. Currently, a mainstream method of obtaining the point cloud is radar (LiDAR) laser detection and measurement, and is mainly applied to fields such as self-driving and surveying and mapping. In recent years, the manner of obtaining the point cloud gradually expands to the field of electromagnetic waves (radars). For example, in single-station sensing, utilizing raw echoes to extract a point cloud for environment sensing is one of main technical paths currently used for single-station sensing.

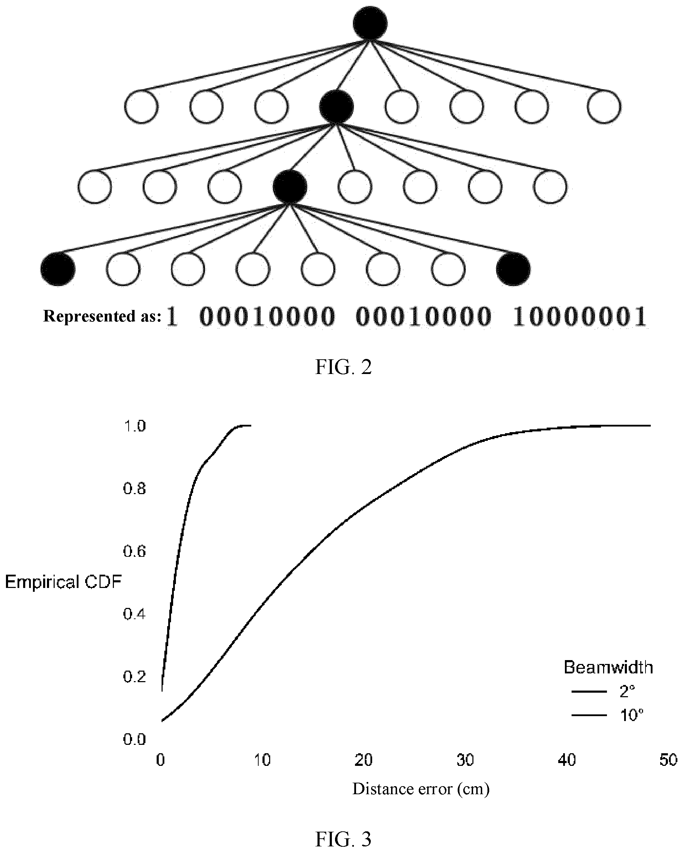

3. Octree: An octree is one of the basic technologies for describing and compressing sensing data. A basic idea is to recursively divide and represent space. As shown in FIG. 2, a space range is evenly divided into eight sub-regions. Correspondingly, a node of the tree is expanded into eight sub-nodes, and each sub-node corresponds to one sub-region.

If and only if there is a data point in the sub-region, the corresponding sub-node is 1. The octree shown in FIG. 2 may be represented as: 1 00010000 00010000 10000001.

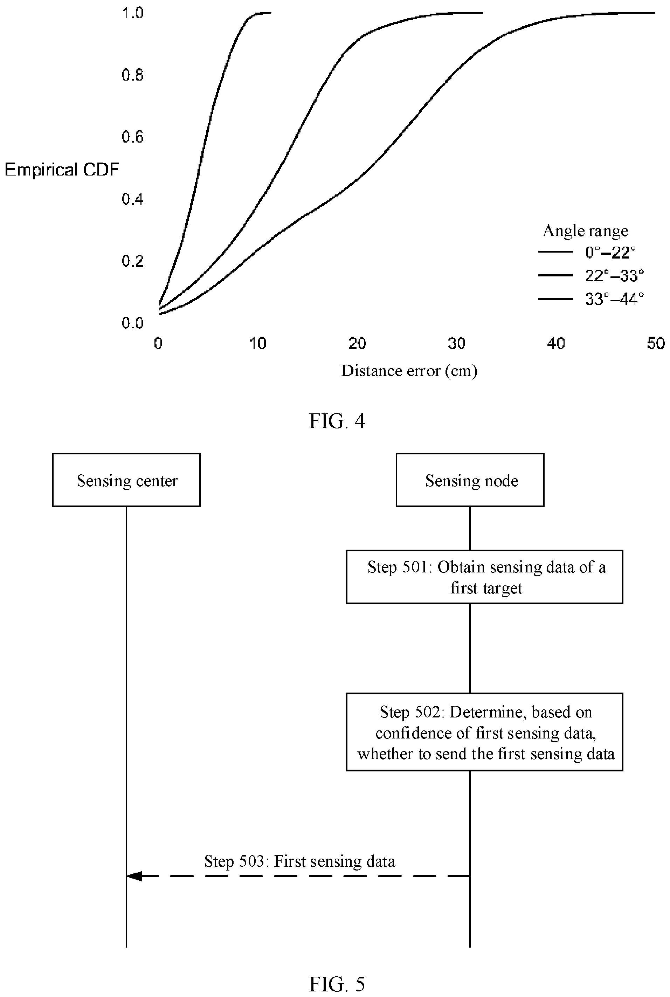

Sensing precision of electromagnetic-based wireless base stations and terminals is affected by factors such as a bandwidth, an antenna array size, a beamwidth, an angle of arrival (AoA), and a roughness and a material of a sensed object. FIG. 3 shows a cumulative distribution function (cumulative distribution function, CDF) curve of a bandwidth and a sensing distance error. It may be learned that the sensing distance error varies according to the bandwidth. FIG. 4 shows a CDF curve of a beam angle of arrival and a sensing distance error. It may be learned that the sensing distance error varies according to the AoA. The foregoing factors cause different precision of point clouds, voxels, and environment reconstruction results sensed by different sensing nodes. In addition, a sensing result is highly correlated with a surrounding environment. Even for a same TRP, sensing precision at different locations and at different moments is different.

In addition, in a multi-device joint sensing scenario, sensing regions of different devices spatially overlap to some extent, and most scenarios of an environment do not change with time. There is a large amount of redundancy between data sensed by each device at each moment, and there are repeated reports of data. This wastes communication resources. Effect of compressing data by using the octree is limited, and a data amount is still huge after compression. Therefore, data redundancy needs to be further used to reduce a reported data amount, to reduce consumption of air interface resources.

For the foregoing problem, embodiments of this application provide a communication method, so that data redundancy and resource consumption can be reduced, and sensing precision can be improved. As shown in FIG. 5, the method may include the following steps.

Step 501: A sensing node obtains sensing data of a first target.

The first target may be a to-be-sensed target. The to-be-sensed target may be mobile, for example, a vehicle that is moving. The sensed target may alternatively be stationary, for example, a vehicle parked on a roadside, or may be another target that needs to be sensed, for example, a road, a home, or a building. This is not limited in embodiments of this application.

The sensing data of the first target is data obtained by the sensing node by sensing the first target. The sensing data may be geometric information of the first target, or may be location information. For example, the sensing data may be a distance between the first target and the sensing node. For example, when the sensing target is a vehicle, the sensing data may be a distance that is between the vehicle and the sensing node and that is obtained by the sensing node through sensing.

In a possible implementation, the first target may be indicated by a sensing center. For example, the sensing center sends information #A to the sensing node, where the information #A indicates the first target, and the sensing node determines the first target based on the information #A. The information #A indicates the first target in the following several manners:

Manner 1: The information #A may be actual geographic location information of the first target. The information #A may alternatively be other location information that is of the first target and that may replace the geographic location information of the first target. For example, the information #A may be three-dimensional coordinates of the first target in a coordinate system. It may be understood that the coordinate system may be predefined, or may be indicated by the sensing center to the sensing node. In other words, when a coordinate system of the sensing center is consistent with that of the sensing node, the sensing center indicates coordinates of the first target in the coordinate system to the sensing node, and the sensing node determines the first target based on the coordinates. Certainly, a coordinate system of the sensing center may alternatively be inconsistent with that of the sensing node. **In** this case, the sensing center and the sensing node need to predefine a coordinate calculation manner, for example, a manner of converting coordinates 1 of a target A in a coordinate system 1 to corresponding coordinates (for example, coordinates 2) in a coordinate system 2.

Manner 2: The information #A (for example, third information) may indicate location information of a first region, and the first region includes the first target. For example, the first region may include a plurality of to-be-sensed targets, and the first target belongs to the plurality of to-be-sensed targets. That the information #A indicates the location information of the first region may be that the information #A indicates geographic location information of the first region or indicates coordinate information of the first region. Specifically, for a manner of indicating the coordinate information of the first region, refer to the manner in which the information #A indicates the coordinate information of the first target in the manner 1. Details are not described again.

Optionally, the information #A (for example, fourth information) may further indicate a sensing map. It should be understood that the so-called "map" may be a set of data, and the data may be obtained by the sensing center through sensing. Alternatively, when a communication system includes a plurality of sensing nodes, the data may be obtained by the plurality of sensing nodes through sensing and reported to the sensing center. Alternatively, the data may be obtained by the sensing node in a previous sensing process and reported to the sensing center. In other words, the data may include historical data of the first target. In other words, the sensing center sends the sensing map to the sensing node, the data included in the sensing map may be used as local data of the first target, first data belongs to the local data of the first target, and the first data may be used by the sensing node to determine whether to report first sensing data.

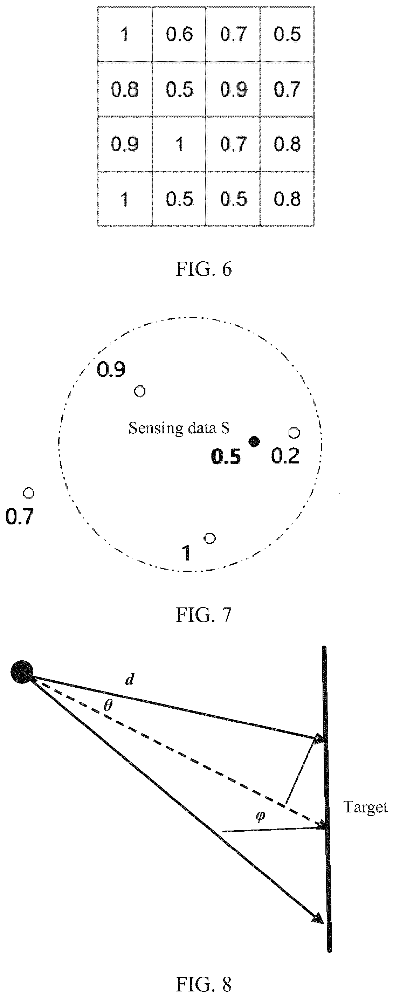

The sensing map may be a grid-based sensing map. As shown in FIG. 6, the sensing map includes a plurality of pieces of data, and the data is distributed in grids. In other words, the data in the grid-based sensing map is evenly distributed.

The sensing map may alternatively be a point cloud sensing map. As shown in FIG. 7, the sensing map includes a plurality of pieces of data and a center point. An example of the center point is a point S in FIG. 7. It should be understood that the center point may be a location corresponding to a target corresponding to a specific piece of data in the sensing map, or may be a predefined geometric point. For example, the geometric point is a specific point on the sensing map, and the geometric point does not represent any sensing target. This is not limited in embodiments of this application.

Step 502: The sensing node determines, based on confidence of the first sensing data, whether to send the first sensing data.

The confidence represents an error between specific data and actual data. For example, the confidence of the first sensing data represents an error between the first sensing data and first actual data, and the first actual data belongs to actual data of the first target.

The confidence may be determined based on a first parameter, and the first parameter may include at least one of the following: a beamwidth, a measurement delay, a bandwidth, or a beam angle of arrival. The beamwidth may be a width of a beam (namely, a first beam) used by the sensing node to obtain the first target. The sensing delay may be a delay in sensing the first target by the sensing node. For example, when the sensing node senses a distance between the sensing node and the first target, the sensing delay may be duration from time when the first beam is sent from the sensing node to time when the sensing node receives a feedback beam. The bandwidth may be a signal bandwidth for sensing the first target. It should be understood that the first target may be an active target, or may be a passive target. This is not limited in embodiments of this application. When the first target is an active target, the bandwidth may be a bandwidth used by the sensing node to communicate with the first target, or a bandwidth of the sensing node, or may be a bandwidth used by the sensing node to send information to the first target. For example, for the information, refer to information transmitted by a sensing node to a target in current integrated sensing and communication. The beam angle of arrival may be a beam angle of arrival at which the first beam reaches the first target.

A relationship between each parameter and the confidence may be briefly described as follows: A greater sensing delay indicates lower confidence. A larger beam angle of arrival in a specific range (for example, 0° to 90°) indicates lower confidence. A larger beamwidth indicates higher confidence. A larger bandwidth indicates higher confidence.

A possible manner of calculating the confidence is as follows:

$$D = \frac{2}{1 + e^{\frac{ct\theta\sin(\varphi-\theta/2)}{2B}}}$$

D is the confidence, c is a light speed, t is the sensing delay, $\varphi$ is the beam angle of arrival, $\theta$ is the beamwidth, and B is the bandwidth.

Optionally, the first parameter may further include a measurement distance, and the measurement distance may be determined based on the measurement delay and the light speed. As shown in FIG. 8, d is the measurement distance, and d=t/2*C. In other words, the measurement distance and the measurement delay may represent each other.

It should be understood that the foregoing calculation manner is merely an example of a confidence calculation manner. Embodiments of this application are not limited thereto. For example, the foregoing parameters may alternatively satisfy the following relationship:

$$D = \frac{e^{\frac{2B}{ct\theta\sin(\varphi-\theta/2)}} - e^{-\frac{2B}{ct\theta\sin(\varphi-\theta/2)}}}{e^{\frac{2B}{ct\theta\sin(\varphi-\theta/2)}} + e^{-\frac{2B}{ct\theta\sin(\varphi-\theta/2)}}},$$

or

$$D = \ln(1 + e^{\frac{2B}{ct\theta\sin(\varphi-\theta/2)}}).$$

It should be understood that there may be another equivalent or alternative manner for calculating D. No exhaustive description is provided herein. Alternatively, another variable or fixed value may be introduced as a reference factor in a calculation process, but the variable or fix value shall fall within the protection scope of this application.

It should be further understood that a manner of determining the confidence is that the confidence may be predefined by the sensing node and the sensing center, may be preconfigured, or may be indicated by the sensing center to the sensing node. This is not limited in embodiments of this application.

In a possible manner, the sensing node may determine, based on the confidence of the first sensing data and confidence of the first data, whether to send the first sensing data, where the first data belongs to the local data of the first target. In other words, the first sensing data is data obtained by the sensing node by performing sensing on the first target, the first data is local data of the sensing node for the first target, and the sensing node may determine, based on the first sensing data and the first data, whether to send the data obtained through sensing. For example, the sensing node may determine, in the following several manners, whether to send the first sensing data:

Manner A: The sensing node determines whether the confidence of the first sensing data is greater than or equal to the confidence of the first data.

For example, if the confidence of the first sensing data is 5, the confidence of the first data is 4, and the sensing node determines that the confidence of the first sensing data is greater than the confidence of the first data, it is determined that the first sensing data may be sent. For example, the first sensing data is sent to the sensing center.

In this manner, the sensing node does not report sensing data whose confidence is less than that of the local data. This can avoid data redundancy, reduce a data reporting amount, and avoid a waste of resources. On the other hand, the sensing node reports sensing data whose confidence is greater than or equal to that of the local data. This can improve precision of the sensing data.

Manner B: The sensing node determines whether a ratio of the confidence of the first sensing data to the confidence of the first data is greater than or equal to a first threshold.

For example, if the first threshold is 1, the confidence of the first sensing data is 8, the confidence of the first data is 4, the ratio of the confidence of the first sensing data to the confidence of the first data is 2, and the sensing node determines that the ratio of the confidence of the first sensing data to the confidence of the first data is greater than the first threshold, it is determined that the first sensing data may be sent. For example, the first sensing data is sent to the sensing center.

The first threshold may be predefined, may be configured, or may be indicated. For example, the first threshold may be indicated by information #B (for example, first information). This is not limited in embodiments of this application.

In this manner, the sensing node does not report sensing data whose confidence ratio is less than the first threshold. This can avoid data redundancy, reduce a data reporting amount, and avoid a waste of resources. On the other hand, the sensing node reports sensing data whose confidence ratio is greater than or equal to the first threshold. This can improve precision of the sensing data.

Manner C: The sensing node determines whether a difference between the confidence of the first sensing data and the confidence of the first data is greater than or equal to a second threshold.

For example, if the second threshold is 2, the confidence of the first sensing data is 7, the confidence of the first data is 3, the difference between the confidence of the first sensing data and the confidence of the first data is 4, and the sensing node determines that the difference between the confidence of the first sensing data and the confidence of the first data is greater than the second threshold, it is determined that the first sensing data may be sent. For example, the first sensing data is sent to the sensing center.

The second threshold may be predefined, may be configured, or may be indicated. For example, the second threshold may be indicated by information #B (for example, first information). This is not limited in embodiments of this application.

In this manner, the sensing node does not report sensing data whose confidence difference is less than the second threshold. This can avoid data redundancy, reduce a data reporting amount, and avoid a waste of resources. On the other hand, the sensing node reports sensing data whose confidence difference is greater than or equal to the second threshold. This can improve precision of the sensing data.

Manner D: The sensing node determines whether the confidence of the first sensing data is greater than or equal to a first confidence threshold.

For example, if the confidence of the first sensing data is 6, the first confidence threshold is 5, and the sensing node determines that the confidence of the first sensing data is greater than the first confidence threshold, it is determined that the first sensing data may be sent. For example, the first sensing data is sent to the sensing center.

The first confidence threshold may be predefined, may be configured, or may be indicated. For example, the first confidence threshold may be indicated by information #B (for example, second information). This is not limited in embodiments of this application.

In this manner, the sensing node does not report sensing data whose confidence is less than the confidence threshold. This can avoid data redundancy, reduce a data reporting amount, and avoid a waste of resources. On the other hand, the sensing node reports sensing data whose confidence is greater than or equal to the confidence threshold. This can improve precision of the sensing data.

It should be understood that the foregoing manners A, B, C, and D are merely several possible examples. Embodiments of this application are not limited thereto. For example, a logarithm operation may also be used to determine a numerical relationship between the confidence of the first sensing data and the confidence of the first data.

The following describes in detail a manner of determining data by the sensing node with reference to different indication content of the information #A.

When the information #A in step 501 indicates a grid-based sensing map:

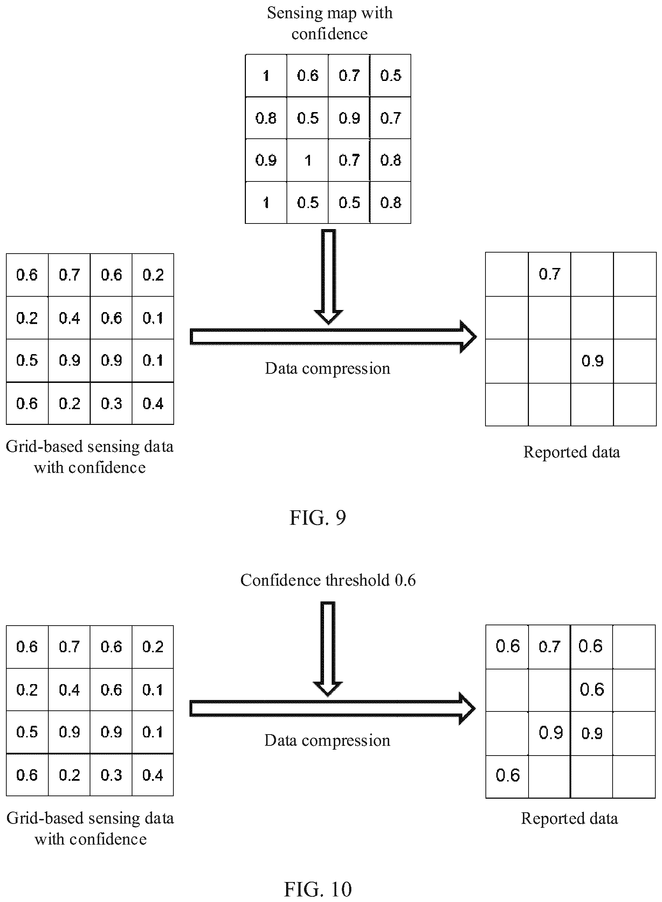

In a possible implementation, the sensing node may determine sensing data according to a method shown in FIG. 9. Specifically, the information #A indicates the grid-based sensing map, the sensing map includes 16 pieces of data with confidence, and data on the sensing map in the figure is confidence corresponding to the 16 pieces of data. After performing sensing at a specific location by using a specific angle of view, the sensing node obtains sensing data of the local region, resulting in 16 pieces of corresponding sensing data and confidence corresponding to the 16 pieces of sensing data. After location coordinates are aligned, the confidence of the sensing data is compared with the confidence of the data on the sensing map. For example, confidence of data in a first row and a second column of the grid-based sensing map is 0.6, and a value of confidence of sensing data at a corresponding location, that is, confidence of the first row and the second column in the grid-based sensing data in the figure is 0.7. The confidence is greater than the confidence of the corresponding location on the sensing map. The sensing node determines that the sensing data corresponding to the location may be reported. Two of the 16 pieces of data shown in the figure are left after comparison, so that data compression is implemented.

In another possible implementation, the sensing node may determine sensing data according to a method shown in FIG. 10. Specifically, after performing sensing at a specific location by using a specific angle of view, the sensing node obtains sensing data of the local region, resulting in 16 pieces of corresponding sensing data and confidence corresponding to the 16 pieces of sensing data. After location coordinates are aligned, the confidence of the sensing data is compared with a confidence threshold. The confidence threshold is delivered by the sensing center, and a value of the confidence threshold is 0.6. For example, the sensing node separately compares the confidence corresponding to the 16 pieces of sensing data with the confidence threshold, and confidence of sensing data corresponding to seven locations shown in the figure is greater than or equal to the confidence threshold. The sensing node determines that the sensing data corresponding to the seven locations may be reported, and data compression can also be implemented.

It should be understood that a value relationship of a confidence threshold or confidence is merely used as an example of a determining manner herein, and the foregoing determining manner of the difference and the ratio is also applicable.

When the information #A in step 501 indicates a point cloud sensing map:
The sensing node may determine K second targets, the K second targets correspond to K pieces of second sensing data, and K is an integer greater than or equal to 1. The sensing node determines, based on confidence of the K pieces of second sensing data and the confidence of the first sensing data, whether to report the first sensing data. Further, the sensing node may determine the K second targets based on a second parameter. For example, the second parameter is a distance threshold, and there are K second targets within a range of the distance threshold; or the second parameter is a value of K, and the K second targets are K targets that are closest to the first target on the sensing map. Optionally, the second parameter may be indicated, for example, indicated by information #A (for example, the fourth information). Alternatively, the second parameter may be predefined. This is not limited in embodiments of this application.

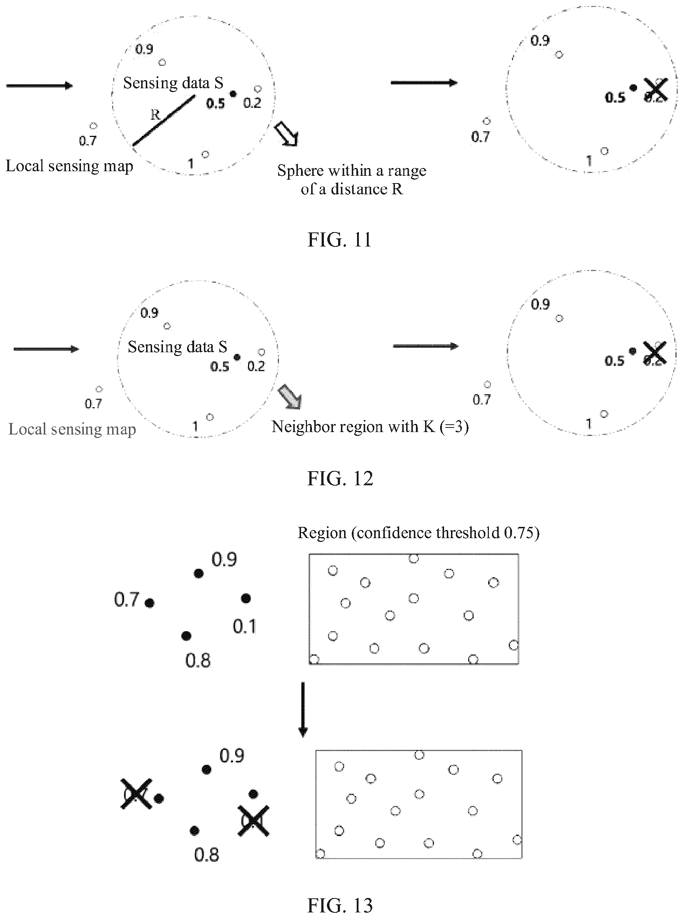

In a possible implementation, as shown in FIG. 11, the second parameter is a distance threshold R. The first target is taken as a center point, and confidence comparison is performed on sensing data corresponding to targets whose distance from the sensing data (the first sensing data S) corresponding to the first target is within a range of R. For example, the targets corresponding to the sensing data may be points on a sphere whose distance from S is within the range of R. If confidence of data with lowest confidence in the sensing data is less than the confidence of the first sensing data, the sensing node determines that the first sensing data may be reported. For example, there are three targets within the range of R in the figure, and confidence of corresponding sensing data is 0.9, 0.2, and 1 respectively, where lowest confidence is 0.2. The confidence of the first sensing data is 0.5 that is greater than 0.2. In this case, the sensing node determines that the first sensing data may be reported. If the lowest confidence of the three points is still greater than the confidence of the first sensing data S, the sensing data is not reported, so that data compression is implemented. In a possible manner, a value of the distance threshold R may be determined by the sensing center. Alternatively, the distance threshold may be predefined. This is not limited in embodiments of this application.

In another possible implementation, as shown in FIG. 12, the second parameter is a value of K. For example, if the value of K is 3, the sensing node determines three targets that are closest to the first target. For example, confidence of sensing data corresponding to remaining three targets except the first sensing data in the figure is 0.2, 0.9, and 1 respectively. The three pieces of confidence may be obtained by the sensing node through query. If the lowest confidence is less than the confidence of the first sensing data, the sensing node determines that the first sensing data may be reported. For example, if the confidence of the first sensing data is 0.5 that is greater than the lowest confidence 0.2, the sensing node determines that the first sensing data may be reported. If the lowest confidence of the three points is still greater than the confidence of the first sensing data S, the sensing data is not reported, so that data compression is implemented. In a possible manner, the value of K may be determined by the sensing center. Alternatively, the value of K may be predefined. This is not limited in embodiments of this application.

It should be understood that a value relationship of confidence is merely used as an example of a determining manner herein, and the foregoing determining manner of the difference, the ratio, and the confidence threshold is also applicable.

When the information #A in step 501 indicates a first region:

The first region may be referred to as a to-be-updated region. As shown in FIG. 13, the first region includes four targets. After performing sensing at a specific location by using a specific angle of view, the sensing node obtains sensing data and confidence of the first region. For example, the confidence of the sensing data corresponding to the four targets is 0.1, 0.7, 0.8, and 0.9 respectively, and the confidence of the sensing data (the first sensing data) corresponding to the first target is 0.9. After location coordinates are aligned, the sensing node may compare the confidence with a confidence threshold. For example, the confidence threshold may be delivered by the sensing center. For example, the sensing center indicates to the sensing node that a value of the confidence threshold is 0.75, and two pieces of the confidence of the sensing data of the four targets are greater than the confidence threshold. In this case, the sensing node determines that the sensing data of two of the four targets may be reported, that is, the sensing data respectively corresponding to the confidence of 0.9 and the confidence of 0.8.

It should be understood that the confidence threshold is merely used as an example of a determining manner herein, and the foregoing determining manner of the difference, the ratio, and the value relationship is also applicable.

Optionally, the first region may include at least one sub-region. The at least one sub-region is in a one-to-one correspondence with at least one confidence threshold, and the at least one confidence threshold includes the first confidence threshold. Alternatively, the at least one sub-region is in a one-to-one correspondence with at least one threshold, and the at least one threshold includes the first threshold or the second threshold. In other words, the first region may be divided into blocks, and different sub-regions may correspond to different confidence thresholds, or different sub-regions may correspond to different first thresholds or second thresholds. Specifically, for an implementation process, refer to the foregoing related descriptions. Details are not described again.

It should be understood that different sub-regions of the first region may correspond to different confidence thresholds or thresholds. That is, different sub-regions of the first region may have different sensing requirements. The sensing node selects, by using different confidence thresholds or thresholds, sensing data to be reported to the sensing center, so that the sensing requirements of the different sub-regions can be matched, and the precision of the sensing data is further improved.

Optionally, after the sensing node determines that the first sensing data may be reported, the method may further include the following steps.

Step 503: The sensing node sends the first sensing data to the sensing center, and correspondingly, the sensing center receives the first sensing data.

It should be understood that, when the sensing node determines that a plurality of pieces of sensing data may be reported, for example, in step 502, the sensing node determines that there is more than one piece of data that is greater than the confidence threshold, the sensing node may report all the data. **In** other words, the sensing node reports at least one piece of sensing data to the sensing center, where the at least one piece of sensing data includes the first sensing data.

Optionally, for sensing data that is not reported, the sensing node may delete the sensing data.

Optionally, after receiving the reported sensing data, the sensing center may update the sensing map. The sensing map may be a data map of some sensing targets in a target environment. The target environment may be reconstructed by updating the sensing map. Further, when there are a plurality of sensing nodes in a sensing system, the sensing center may send incremental sensing update data and corrected environment reconstruction result data to each sensing node, to update a local map of each sensing node.

To clearly understand an implementation of embodiments of this application, a detailed procedure example is provided below.

Step 1401: A sensing center delivers sensing signaling to a sensing node, and correspondingly, the sensing node receives the sensing signaling.

The sensing signaling may be signaling used by the sensing node to start a sensing procedure. Alternatively, the sensing signaling may be signaling used by the sensing center to configure a sensing parameter for the sensing node. For example, the sensing parameter may indicate a communication resource. This is not limited in embodiments of this application.

Step 1402: The sensing node reports identification information of the node and related information of a sensing capability to the sensing center, and correspondingly, the sensing center receives the identification information of the sensing node and the related information of the sensing capability.

The identification information of the sensing node identifies the sensing node, and the identification information of the sensing node may be identity information of the sensing node. The related information of the sensing capability indicates a sensing capability of the sensing node. For example, the sensing capability may be a sensing range of the sensing node, or may be a quantity of sensing targets of the sensing node, or the like. This is not limited in embodiments of this application.

Step 1403: The sensing center delivers a sensing task and a sensing map to the sensing node, and correspondingly, the sensing node receives the sensing task and the sensing map.

Optionally, the sensing center may further deliver a confidence threshold to the sensing node, and correspondingly, the sensing node receives the confidence threshold.

The sensing task may be a parameter to be sensed by the sensing node. For example, the sensing task may be to sense a distance between a first target and the sensing node, or the sensing task may be to sense a size of a first target. This is not limited in embodiments of this application. For the sensing map, refer to the descriptions in step 501. Optionally, the sensing map may be a point cloud sensing map, the sensing map may be a grid-based sensing map, or the sensing map may be location information of a region, for example, location information of a first region. For the first region, refer to the descriptions in step 501. Details are not described herein again.

Step 1404: The sensing node obtains sensing data based on the sensing task.

Step 1405: The sensing node compresses the data.

Specifically, for a manner in which the sensing node compresses the data, refer to the manner in which the sensing node determines whether to send the first sensing data in step 502. Details are not described herein again.

Step 1406: The sensing node reports the sensing data, and correspondingly, the sensing center receives the sensing data.

Step 1407: The sensing center updates the sensing map based on the received sensing data.

Optionally, the procedure may further include: Step 1408: The sensing center delivers an incremental update of the sensing map to another sensing node, and correspondingly, the another sensing node receives the incremental update of the sensing map.

Corresponding to the different types of sensing maps in step 1403, the incremental update that is of the sensing map and that is delivered by the sensing center in step 1408 may be an incremental update of the point cloud sensing map, may be an incremental update of the grid-based sensing map, or may be an incremental update of the first region.

In the method, the sensing node determines sensing data based on confidence, and reports sensing data corresponding to confidence that meets a condition. This implements data compression, greatly reduces redundant data, and avoids a waste of resources. In addition, the confidence is used as a reference factor, and sensing data that meets a confidence condition is reported to the sensing center, so that precision of sensing and environment reconstruction can be improved.

Embodiments described in this specification may be independent solutions, or may be combined based on internal logic. All these solutions fall within the protection scope of this application. It should be understood that the steps in the foregoing embodiments are merely intended to clearly describe the technical solutions of embodiments, and a sequence of performing the steps is not limited.

The sensing data in this application may be used for target measurement and control. However, this application is not limited thereto. For example, the sensing data may also be used for environment reconstruction, and the reconstructed environment may assist in communication channel modeling and then feed back communication. The foregoing is merely an example of an application scenario of this application. This is not limited in this application.

In the foregoing embodiments provided in this application, the method provided in embodiments of this application is described from a perspective of interaction between devices. To implement functions in the method provided in the foregoing embodiments of this application, a network device or a terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is an example, and is merely logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

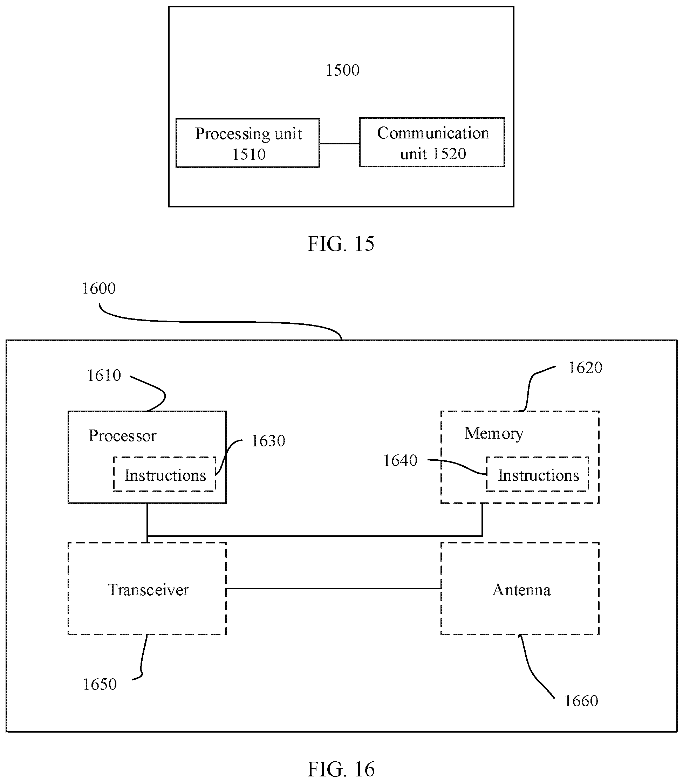

The following describes in detail a communication apparatus provided in embodiments of this application with reference to FIG. 15 and FIG. 16. It should be understood that descriptions of apparatus embodiments correspond to the descriptions of the method embodiments. Therefore, for content that is not described in detail, refer to the foregoing method embodiments. For brevity, details are not described herein again.

Same as the foregoing concept, as shown in FIG. 15, an embodiment of this application provides a communication apparatus 1500, configured to implement functions of the sensing node in the foregoing methods. For example, the apparatus may be a software module or a chip system. In this embodiment of this application, the chip system may include a chip, or may include a chip and another discrete device. The apparatus 1500 may include a processing unit 1510 and a communication unit 1520.

In this embodiment of this application, the communication unit may also be referred to as a transceiver unit or a transceiver module, and may include a sending unit and/or a receiving unit, respectively configured to perform a sending step and a receiving step of the sensing node in the foregoing method embodiments.

The communication unit may also be referred to as a transceiver, a transceiver machine, a transceiver apparatus, or the like. The processing unit may also be referred to as a processor, a processing board, a processing module, a processing apparatus, or the like. Optionally, a device that is in the communication unit 1520 and that is configured to implement a receiving function may be considered as a receiving unit, and a device that is in the communication unit 1520 and that is configured to implement a sending function may be considered as a sending unit. In other words, the communication unit 1520 includes the receiving unit and the sending unit. The communication unit sometimes may also be referred to as a transceiver machine, a transceiver, an interface circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

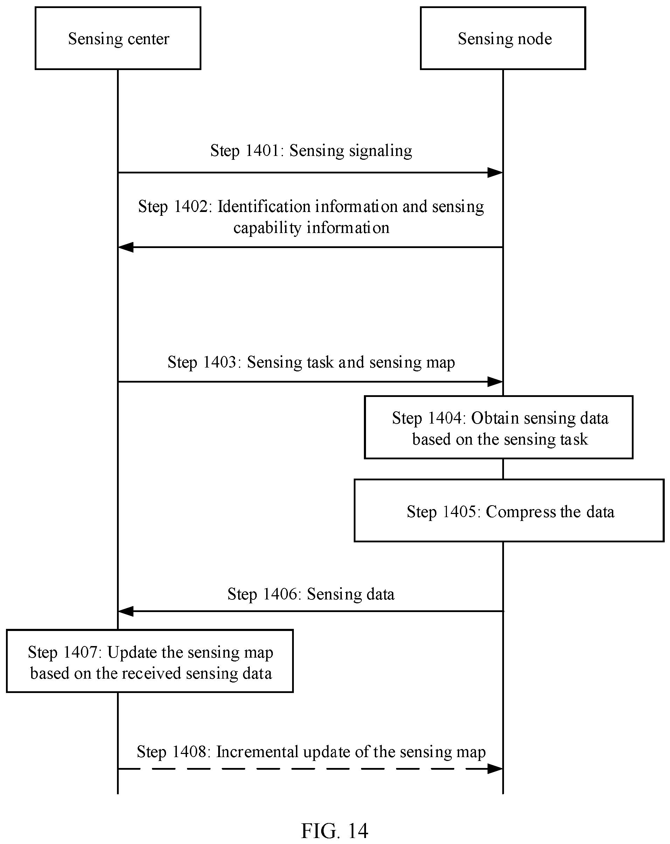

When the communication apparatus 1500 performs functions of the sensing center in a procedure shown in any one of FIG. 5 to FIG. 14 in the foregoing embodiments:

The communication unit is configured to receive first sensing data, where the first sensing data is determined based on confidence of the first sensing data, the first sensing data belongs to sensing data of a first target, the confidence is determined based on a first parameter, the first parameter includes at least one of the following: a beamwidth of a first beam, a delay of sensing the first target, a signal bandwidth for sensing the first target, or a beam angle of arrival at which a first beam reaches the first target, and the first beam is a beam used for sensing the first target.

The processing unit is configured to update first data of the first target to the first sensing data, and the first data belongs to local data of the first target.

For example, the communication unit may be configured to send sensing signaling.

The communication unit may be further configured to configure a sensing task, a threshold, a confidence threshold, a sensing map, and the like.

The communication unit may be configured to receive sensing data.

The processing unit (also referred to as a processing module) may be configured to update a sensing map and the like.

When the communication apparatus 1500 performs functions of the sensing node in a procedure shown in any one of FIG. 5 to FIG. 14 in the foregoing embodiments:

The processing unit is configured to obtain sensing data of a first target.

The processing unit may be further configured to determine, based on confidence of first sensing data, whether to send the first sensing data, where the first sensing data belongs to the sensing data of the first target, the confidence is determined based on a first parameter, the first parameter includes at least one of the following: a beamwidth of a first beam, a delay of sensing the first target, a signal bandwidth for sensing the first target, or a beam angle of arrival at which a first beam reaches the first target, and the first beam is a beam used for sensing the first target.

For example, the communication unit may be configured to: receive sensing signaling, a sensing map, a threshold, a confidence threshold, and the like, and send sensing data.

The processing unit may be configured to determine whether to send the first sensing data.

The foregoing is merely an example. The processing unit 1510 and the communication unit 1520 may further perform other functions. For more detailed descriptions, refer to related descriptions in the method embodiments shown in FIG. 5 to FIG. 16 or other method embodiments. Details are not described herein again.

FIG. 16 shows a communication apparatus 1600 according to an embodiment of this application. The apparatus shown in FIG. 16 may be an implementation of a hardware circuit of the apparatus shown in FIG. 15. The communication apparatus is applicable to the foregoing flowcharts, and performs functions of the terminal device or the network device in the foregoing method embodiments. For ease of description, FIG. 16 shows only main components of the communication apparatus.

The communication apparatus 1600 may be a sensing node, and can implement functions of the sensing node in the methods provided in embodiments of this application. Alternatively, the communication apparatus 1600 may be an apparatus that can support the sensing node in implementing corresponding functions in the methods provided in embodiments of this application. The communication apparatus 1600 may be a chip system. In this embodiment of this application, the chip system may include a chip, or may include a chip and another discrete device. For a specific function, refer to descriptions in the foregoing method embodiments.

The communication apparatus 1600 includes one or more processors 1610, configured to implement or support the communication apparatus 1600 in implementing functions of a first terminal apparatus or a second terminal apparatus in the methods provided in embodiments of this application. For details, refer to detailed descriptions in the method examples. Details are not described herein again. The processor 1610 may also be referred to as a processing unit or a processing module, and may implement a specific control function. The processor 1610 may be a general-purpose processor, a dedicated processor, or the like. For example, the processor 1610 includes a central processing unit, a baseband processor, an application processor, a modem processor, a graphics processing unit, an image signal processor, a digital signal processor, a video codec processor, a controller, and/or a neural-network processing unit. The central processing unit may be configured to: control the communication apparatus 1600, execute a software program, and/or process data. Different processors may be independent devices, or may be integrated into one or more processors, for example, integrated into one or more application-specific integrated circuits. It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the communication apparatus 1600 includes one or more memories 1620, configured to store instructions 1640. The instructions may be run on the processor 1610, to enable the communication apparatus 1600 to perform the methods described in the foregoing method embodiments. The memory 1620 is coupled to the processor 1610. The coupling in this embodiment of this application may be an indirect coupling or a communication connection between apparatuses, units, or modules in an electrical form, a mechanical form, or another form, and is used for information exchange between the apparatuses, the units, or the modules. The processor 1610 may cooperate with the memory 1620. At least one of the at least one memory may be included in the processor. It should be noted that the memory 1620 is not mandatory. Therefore, the memory 1620 is shown by using a dashed line in FIG. 16.

Optionally, the memory 1620 may further store data. The processor and the memory may be separately disposed, or may be integrated together. In this embodiment of this application, the memory 1620 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

Optionally, the communication apparatus 1600 may include instructions 1630 (which may also be referred to as code or a program sometimes), and the instructions 1630 may be run on the processor, to enable the communication apparatus 1600 to perform the methods described in the foregoing embodiments. The processor 1610 may store data.

Optionally, the communication apparatus 1600 may further include a transceiver 1650 and an antenna 1660. The transceiver 1650 may be referred to as a transceiver unit, a transceiver module, a transceiver machine, a transceiver circuit, a transceiver, an input/output interface, or the like, and is configured to implement a transceiver function of the communication apparatus 1600 by using the antenna 1660.

The processor 1610 and the transceiver 1650 described in this application may be implemented in an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1600 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1600 may include more or fewer components, some components are integrated, or some components are split. The components may be implemented by hardware, software, or a combination of software and hardware.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that these modifications and variations fall within the scope of the claims of this application and equivalent technologies thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, comprising:

   obtaining sensing data of a first target; and
   determining, based on confidence of first sensing data, whether to send the first sensing data, wherein the first sensing data belongs to the sensing data of the first target, the confidence is determined based on a first parameter, the first parameter comprises at least one of the following: a beamwidth of a first beam, a delay of sensing the first target, a signal bandwidth for sensing the first target, or a beam angle of arrival at which the first beam reaches the first target, and the first beam is a beam used for sensing the first target.

2. The method according to claim 1, wherein the determining, based on confidence of first sensing data, whether to send the first sensing data comprises: determining, based on the confidence of the first sensing data and confidence of first data, whether to send the first sensing data, wherein the first data belongs to local data of the first target.

3. The method according to claim 2, wherein the method comprises:

   when the confidence of the first sensing data is greater than or equal to the confidence of the first data, sending the first sensing data;
   when a ratio of the confidence of the first sensing data to the confidence of the first data is greater than or equal to a first threshold, sending the first sensing data; or
   when a difference between the confidence of the first sensing data and the confidence of the first data is greater than or equal to a second threshold, sending the first sensing data.

4. The method according to claim 3, wherein the method further comprises:
   receiving first information, wherein the first information indicates the first threshold or the second threshold.

5. The method according to claim 1, wherein the determining, based on confidence of first sensing data, whether to send the first sensing data comprises: determining, based on the confidence of the first sensing data and a first confidence threshold, whether to send the first sensing data.

6. The method according to claim 5, wherein the method further comprises:
   receiving second information, wherein the second information indicates the first confidence threshold.

7. The method according to any one of claims 1 to 6, wherein the method further comprises:
   receiving third information, wherein the third information indicates location information of a first region, and the first region comprises the first target.

8. The method according to claim 7, wherein the first region comprises at least one sub-region, the at least one sub-region is in a one-to-one correspondence with at least one confidence threshold, and the at least one confidence threshold comprises the first confidence threshold, or the at least one sub-region is in a one-to-one correspondence with at least one threshold, and the at least one threshold comprises the first threshold or the second threshold.

9. The method according to claim 1, wherein the method further comprises:

determining K second targets, wherein the K second targets correspond to K pieces of second sensing data, and K is an integer greater than or equal to 1; and
the determining, based on confidence of first sensing data, whether to send the first sensing data comprises:
determining, based on confidence of the K pieces of second sensing data and the confidence of the first sensing data, whether to report the first sensing data.

10. The method according to claim 9, wherein the method further comprises:

receiving a second parameter, wherein
the second parameter is a distance threshold, and there are K second targets within a range of the distance threshold; or
the second parameter is a value of K, the K second targets are K targets that are closest to the first target on a sensing map, and the sensing map indicates the first target and the K second targets.

11. The method according to claim 10, wherein the method further comprises:
receiving fourth information, wherein the fourth information indicates the sensing map.

12. The method according to any one of claims 1 to 11, wherein the confidence and the first parameter satisfy the following relationship:

$$D = \frac{2}{1 + e^{\frac{ct\theta\sin(\varphi-\theta/2)}{2B}}},$$

wherein
D is the confidence, c is a light speed, t is the delay of sensing the first target, φ is the beam angle of arrival at which the first beam reaches the first target, θ is the beamwidth of the first beam, and B is the signal bandwidth for sensing the first target.

13. A sensing method, comprising:

receiving first sensing data, wherein the first sensing data is determined based on confidence of the first sensing data, the first sensing data belongs to sensing data of a first target, the confidence is determined based on a first parameter, the first parameter comprises at least one of the following: a beamwidth of a first beam, a delay of sensing the first target, a signal bandwidth for sensing the first target, or a beam angle of arrival at which the first beam reaches the first target, and the first beam is a beam used for sensing the first target; and
updating first data of the first target to the first sensing data, wherein the first data belongs to local data of the first target.

14. The method according to claim 13, wherein the confidence of the first sensing data is greater than or equal to confidence of the first data, a ratio of the confidence of the first sensing data to confidence of the first data is greater than or equal to a first threshold, a difference between the confidence of the first sensing data and confidence of the first data is greater than or equal to a second threshold, or the confidence of the first sensing data is greater than or equal to a first confidence threshold.

15. The method according to claim 14, wherein before the receiving first sensing data, the method further comprises:

sending first information, wherein the first information indicates the first threshold or the second threshold; or
sending second information, wherein the second information indicates the first confidence threshold.

16. The method according to any one of claims 13 to 15, wherein the method further comprises:
sending third information, wherein the third information indicates location information of a first region, and the first region comprises the first target.

17. The method according to claim 16, wherein the first region comprises at least one sub-region, the at least one sub-region is in a one-to-one correspondence with at least one confidence threshold, and the at least one confidence threshold comprises the first confidence threshold, or the at least one sub-region is in a one-to-one correspondence with at least one threshold, and the at least one threshold comprises the first threshold or the second threshold.

**18.** The method according to claim 13, wherein the method further comprises:

> sending a second parameter, wherein the second parameter is a distance threshold, there are K second targets within a range of the distance threshold, the K second targets correspond to K pieces of second sensing data, and K is an integer greater than or equal to 1; or
> the second parameter is a value of K, the K second targets are K targets that are closest to the first target on a sensing map, the sensing map indicates the first target and the K second targets, and
> that the first sensing data is determined based on confidence of the first sensing data comprises:
> the first sensing data is determined based on confidence of the K pieces of second sensing data and the confidence of the first sensing data.

**19.** The method according to claim 18, wherein the method further comprises:
sending fourth information, wherein the fourth information further indicates the sensing map.

**20.** The method according to any one of claims 13 to 19, wherein the confidence and the first parameter satisfy the following relationship:

$$D = \frac{2}{1 + e^{\frac{ct\theta\sin(\varphi - \theta/2)}{2B}}} ,$$

wherein
D is the confidence, c is a light speed, t is the delay of sensing the first target, $\varphi$ is the beam angle of arrival at which the first beam reaches the first target, $\theta$ is the beamwidth of the first beam, and B is the signal bandwidth for sensing the first target.

**21.** A communication apparatus, comprising a processing module, wherein the processing module is configured to obtain sensing data of a first target, the processing module is further configured to determine, based on confidence of first sensing data, whether to send the first sensing data, the first sensing data belongs to the sensing data of the first target, the confidence is determined based on a first parameter, the first parameter comprises at least one of the following: a beamwidth of a first beam, a delay of sensing the first target, a signal bandwidth for sensing the first target, or a beam angle of arrival at which the first beam reaches the first target, and the first beam is a beam used for sensing the first target.

**22.** The apparatus according to claim 21, wherein the processing module is configured to determine, based on the confidence of the first sensing data and confidence of first data, whether to send the first sensing data, wherein the first data belongs to local data of the first target.

**23.** The apparatus according to claim 22, wherein the apparatus further comprises a transceiver module, and the transceiver module is configured to: when the confidence of the first sensing data is greater than or equal to the confidence of the first data, send the first sensing data;

> when a ratio of the confidence of the first sensing data to the confidence of the first data is greater than or equal to a first threshold, send the first sensing data; or
> when a difference between the confidence of the first sensing data and the confidence of the first data is greater than or equal to a second threshold, send the first sensing data.

**24.** The apparatus according to claim 23, wherein the transceiver module is further configured to receive second information, wherein the second information indicates the first threshold or the second threshold.

**25.** The apparatus according to claim 21, wherein the processing module is configured to determine, based on the confidence of the first sensing data and a first confidence threshold, whether to send the first sensing data.

**26.** The apparatus according to claim 25, wherein the apparatus further comprises a transceiver module, and the transceiver module is configured to receive second information, wherein the second information indicates the first confidence threshold.

**27.** The apparatus according to any one of claims 21 to 26, wherein the apparatus further comprises the transceiver module, and the transceiver module is configured to receive third information, wherein the third information indicates location information of a first region, and the first region comprises the first target.

**28.** The apparatus according to claim 27, wherein the first region comprises at least one sub-region, the at least one sub-region is in a one-to-one correspondence with at least one confidence threshold, and the at least one confidence threshold comprises the first confidence threshold, or the at least one sub-region is in a one-to-one correspondence with at least one threshold, and the at least one threshold comprises the first threshold or the second threshold.

**29.** The apparatus according to claim 21, wherein the processing module is further configured to determine K second targets, the K second targets correspond to K pieces of second sensing data, K is an integer greater than or equal to 1, and the processing module is further configured to determine, based on confidence of the K pieces of second sensing data and confidence of the first sensing data, whether to report the first sensing data.

**30.** The apparatus according to claim 29, wherein the apparatus further comprises a transceiver module, and the transceiver module is configured to receive a second parameter, wherein

the second parameter is a distance threshold, and there are K second targets within a range of the distance threshold; or
the second parameter is a value of K, the K second targets are K targets that are closest to the first target on a sensing map, and the sensing map indicates the first target and the K second targets.

**31.** The apparatus according to claim 29, wherein the transceiver module is further configured to receive fourth information, and the fourth information indicates the sensing map.

**32.** The apparatus according to any one of claims 21 to 31, wherein the confidence and the first parameter satisfy the following relationship:

$$D = \frac{2}{1+e^{\frac{ct\theta\sin(\varphi-\theta/2)}{2B}}},$$

wherein
D is the confidence, c is a light speed, t is the delay of sensing the first target, $\varphi$ is the beam angle of arrival at which the first beam reaches the first target, $\theta$ is the beamwidth of the first beam, and B is the signal bandwidth for sensing the first target.

**33.** A communication apparatus, comprising a transceiver module and a processing module, wherein the transceiver module is configured to receive first sensing data, the first sensing data is determined based on confidence of the first sensing data, the first sensing data belongs to sensing data of a first target, the confidence is determined based on a first parameter, the first parameter comprises at least one of the following: a beamwidth of a first beam, a delay of sensing the first target, a signal bandwidth for sensing the first target, or a beam angle of arrival at which the first beam reaches the first target, the first beam is a beam used for sensing the first target, the processing module is configured to update first data of the first target to the first sensing data, and the first data belongs to local data of the first target.

**34.** The apparatus according to claim 33, wherein the confidence of the first sensing data is greater than or equal to confidence of the first data, a ratio of the confidence of the first sensing data to confidence of the first data is greater than or equal to a first threshold, a difference between the confidence of the first sensing data and confidence of the first data is greater than or equal to a second threshold, or the confidence of the first sensing data is greater than or equal to a first confidence threshold.

**35.** The apparatus according to claim 34, wherein the transceiver module is further configured to send first information, and the first information indicates the first threshold or the second threshold; or the transceiver module is further configured to send second information, and the second information indicates the first confidence threshold.

**36.** The apparatus according to any one of claims 33 to 35, wherein the transceiver module is further configured to send third information, the third information indicates location information of a first region, and the first region comprises the first target.

**37.** The apparatus according to claim 36, wherein the first region comprises at least one sub-region, the at least one sub-region is in a one-to-one correspondence with at least one confidence threshold, and the at least one confidence threshold comprises the first confidence threshold, or the at least one sub-region is in a one-to-one correspondence with at least one threshold, and the at least one threshold comprises the first threshold or the second threshold.

**38.** The apparatus according to claim 33, wherein the transceiver module is further configured to send a second parameter, wherein

the second parameter is a distance threshold, there are K second targets within a range of the distance threshold, the K second targets correspond to K pieces of second sensing data, and K is an integer greater than or equal to 1; or
the second parameter is a value of K, the K second targets are K targets that are closest to the first target on the sensing map, the sensing map indicates the first target and the K second targets, and
that the first sensing data is determined based on confidence of the first sensing data comprises:
the first sensing data is determined based on confidence of the K pieces of second sensing data and the confidence of the first sensing data.

**39.** The apparatus according to claim 38, wherein the transceiver module is further configured to send fourth information, and the fourth information further indicates the sensing map.

**40.** The apparatus according to any one of claims 33 to 39, wherein the confidence and the first parameter satisfy the following relationship:

$$D = \frac{2}{1 + e^{\frac{ct\theta\sin(\varphi-\theta/2)}{2B}}} \, ,$$

wherein
D is the confidence, c is a light speed, t is the measurement delay of sensing the first target, $\varphi$ is the beam angle of arrival at which the first beam reaches the first target, $\theta$ is the beamwidth of the first beam, and B is the signal bandwidth for sensing the first target.

**41.** A communication system, comprising the communication apparatus according to any one of claims 21 to 32, and/or the communication apparatus according to any one of claims 33 to 40.

**42.** A communication apparatus, comprising:
a processor, configured to execute computer instructions or a logic circuit stored in a memory, to enable the apparatus to perform the method according to any one of claims 1 to 21.

**43.** The apparatus according to claim 42, wherein the apparatus further comprises the memory.

**44.** The apparatus according to claim 42 or 43, wherein the apparatus further comprises a communication interface, and the communication interface is coupled to the processor; and
the communication interface is configured to input and/or output information.

**45.** The apparatus according to any one of claims 42 to 44, wherein the apparatus is a chip.

**46.** A computer-readable storage medium, wherein the computer-readable storage medium stores computer instructions, and when the computer instructions are run on a computer, the method according to any one of claims 1 to 21 is performed.

**47.** A computer program, wherein when the computer program is run on a computer, the method according to any one of claims 1 to 21 is performed.

**48.** A computer program product, comprising computer instructions, wherein when the computer instructions are run on a computer, the method according to any one of claims 1 to 21 is performed.

FIG. 1

**Represented as:** 1 00010000 00010000 10000001

FIG. 2

FIG. 3

FIG. 4

FIG. 5

| 1 | 0.6 | 0.7 | 0.5 |
|---|-----|-----|-----|
| 0.8 | 0.5 | 0.9 | 0.7 |
| 0.9 | 1 | 0.7 | 0.8 |
| 1 | 0.5 | 0.5 | 0.8 |

FIG. 6

FIG. 7

FIG. 8

Sensing map with
confidence

| 1 | 0.6 | 0.7 | 0.5 |
| 0.8 | 0.5 | 0.9 | 0.7 |
| 0.9 | 1 | 0.7 | 0.8 |
| 1 | 0.5 | 0.5 | 0.8 |

| 0.6 | 0.7 | 0.6 | 0.2 |
| 0.2 | 0.4 | 0.6 | 0.1 |
| 0.5 | 0.9 | 0.9 | 0.1 |
| 0.6 | 0.2 | 0.3 | 0.4 |

Data compression

| | 0.7 | | |
| | | | |
| | | 0.9 | |
| | | | |

Grid-based sensing data
with confidence

Reported data

FIG. 9

Confidence threshold 0.6

| 0.6 | 0.7 | 0.6 | 0.2 |
| 0.2 | 0.4 | 0.6 | 0.1 |
| 0.5 | 0.9 | 0.9 | 0.1 |
| 0.6 | 0.2 | 0.3 | 0.4 |

Data compression

| 0.6 | 0.7 | 0.6 | |
| | | 0.6 | |
| | | 0.9 | 0.9 |
| 0.6 | | | |

Grid-based sensing data
with confidence

Reported data

FIG. 10

FIG. 11

FIG. 12

FIG. 13

| Sensing center | | Sensing node |
|---|---|---|

Step 1401: Sensing signaling →

Step 1402: Identification information and sensing capability information ←

Step 1403: Sensing task and sensing map →

Step 1404: Obtain sensing data based on the sensing task

Step 1405: Compress the data

Step 1406: Sensing data ←

Step 1407: Update the sensing map based on the received sensing data

Step 1408: Incremental update of the sensing map →

FIG. 14

1500

| Processing unit 1510 | | Communication unit 1520 |

FIG. 15

1600

1610

Processor

1630

Instructions

1620

Memory

1640

Instructions

Transceiver

Antenna

1650

1660

FIG. 16

## INTERNATIONAL SEARCH REPORT

| | International application No. |
|---|---|
| | **PCT/CN2022/117991** |

| A. | CLASSIFICATION OF SUBJECT MATTER |
|---|---|

H04L 1/00(2006.01)i; H04W 64/00(2009.01)i

According to International Patent Classification (IPC) or to both national classification and IPC

| B. | FIELDS SEARCHED |
|---|---|

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

WPABSC; CNTXT; 3GPP; ENTXTC; VEN: 感测, 感知, 信任, 置信, 可信, 可靠, 波束, 带宽, 到达角, 延时, 时延, 发送, 上传, 上载, 减少, 减小, 降低, 压缩, 数据冗余, sensing, confidence level, beam, bandwidth, AoA, delay, update, reduce, redundancy

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113497670 A (HUAWEI TECHNOLOGIES CO., LTD.) 12 October 2021 (2021-10-12) description, paragraphs 5-167 | 1-11, 13-19, 21-31, 33-39, 41-48 |
| A | CN 113497670 A (HUAWEI TECHNOLOGIES CO., LTD.) 12 October 2021 (2021-10-12) description, paragraphs 5-167 | 12, 20, 32, 40 |
| A | CN 114428236 A (NANJING CHUHANG TECHNOLOGY CO., LTD.) 03 May 2022 (2022-05-03) entire document | 1-48 |
| A | WO 2022001713 A1 (HUAWEI TECHNOLOGIES CO., LTD.) 06 January 2022 (2022-01-06) entire document | 1-48 |
| A | WO 2022012360 A1 (HUAWEI TECHNOLOGIES CO., LTD.) 20 January 2022 (2022-01-20) entire document | 1-48 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2022** | **18 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/117991** |

| Patent document cited in search report | | | Publication date (day/month/year) | Patent family member(s) | Publication date (day/month/year) |
| --- | --- | --- | --- | --- | --- |
| CN | 113497670 | A | 12 October 2021 | None | |
| CN | 114428236 | A | 03 May 2022 | None | |
| WO | 2022001713 | A1 | 06 January 2022 | None | |
| WO | 2022012360 | A1 | 20 January 2022 | None | |

Form PCT/ISA/210 (patent family annex) (January 2015)